# EUROPÄISCHE PATENTSCHRIFT

(11) **EP 2 400 125 B1**
(45) Veröffentlichungstag und Bekanntmachung des Hinweises auf die Patenterteilung: **08.05.2013**
(21) Anmeldenummer: 11167041.0
(22) Anmeldetag: 23.05.2011
(51) Int. Cl.: F01N 3/20

(54) **Flanschmodul für einen Vorratstank**
Flange module for a storage tank
Module de bride pour un réservoir de stockage

(30) Priorität: 24.06.2010 DE 102010030490
(43) Veröffentlichungstag der Anmeldung: 28.12.2011
(73) Patentinhaber: Robert Bosch GmbH, 70442 Stuttgart (DE)
(72) Erfinder: Haeberer, Rainer, 75015, Bretten (DE)

(56) Entgegenhaltungen:
- EP-A1- 2 014 886
- WO-A1-2007/141312
- FR-A1- 2 918 718

## Beschreibung

Bei Kraftfahrzeugen mit Verbrennungskraftmaschinen ist aufgrund der in den nächsten Jahren zu erwartenden verschärften Abgasgesetzgebung, unter anderem der Anteil an Stickoxiden im Abgas zu reduzieren. Zur Reduzierung des Stickstoff-Anteils im Abgas wird derzeit das SCR-Verfahren (selektive katalytische Reduktion) eingesetzt, bei dem die Stickoxide unter Einsatz eines Reduktionsmittels zu Stickstoff und Wasserstoff reduziert werden. Als Reduktionsmittel werden in vielen Fällen wässrige Systeme eingesetzt, beispielsweise eine Harnstoff-Wasser-Lösung.

Das eingesetzte Reduktionsmittel, in der Regel in flüssiger Form, wird üblicherweise in einem Tank gelagert und über ein Fördermodul vom Tank zu einem Dosiermodul zur Eindüsung des Reduktionsmittels in das Abgas befördert.

Die derzeit eingesetzten üblichen flüssigen Reduktionsmittel gefrieren je nach (optional) zugesetztem Anti-Frostmittel unterhalb einer Temperatur von ca. -11°C. Um die Anforderungen an die Abgaszusammensetzung erfüllen zu können, muss gewährleistet werden, dass auch bei Temperaturen unterhalb von -11°C nach einer akzeptablen Zeit in ausreichender Menge flüssiges Reduktionsmittel zur Verfügung steht. Daher werden üblicherweise spezielle Heizmaßnahmen vorgesehen, um das Reduktionsmittel im System in den flüssigen Zustand zu überführen bzw. flüssig zu halten. Neben dem Tank werden häufig auch das Fördermodul und/oder die verwendeten Leitungen ganz oder teilweise beheizbar gestaltet.

Aus DE 10 2006 027 487 A1 ist ein Fahrzeugtank für ein flüssiges Reduktionsmittel bekannt, insbesondere für eine Harnstofflösung. Der Fahrzeugtank ist aus Kunststoffmaterial hergestellt. Eine Funktionseinheit, welche neben anderen Elementen eine elektrische Heizvorrichtung und eine Saugleitung zusammenfasst, ist in eine Öffnung im Tank eingesetzt und dichtet diese deckelartig ab. Die notwendigen Öffnungen, beispielsweise die Öffnung zur Aufnahme der Funktionseinheit, für Zu- und Rücklauf, eine Befüllöffnung, sowie zur Be- und Entlüftung werden an der Tankoberseite vorgesehen, d.h. nicht in dem vom flüssigen Reduktionsmittel gefluteten Bereich an der Tankunterseite.

Aus DE 44 32 577 ist bekannt, an einem Tank an der Bodenseite eine Öffnung vorzusehen, an welche für ein Kaltstartsystem ein Tankmodul angeschlossen ist, in welchem eine Heizung angeordnet ist.

Allerdings besteht dabei der Nachteil, dass eine solche an einem Tank vorgesehenen Öffnung unterhalb des Flüssigkeitsspiegels des Reduktionsmittels liegt. Da es sich insbesondere bei einer als Reduktionsmittel eingesetzten Harnstoff-Wasser Lösung um ein besonders kriechfähiges Medium handelt, treten an der Öffnung verstärkt Undichtigkeiten auf. Da sich einerseits die wässrige Harnstofflösung beim Kontakt mit Luft sofort in Kristalle umwandelt und andererseits zur Korrosion an elastomeren Kunststoffen und metallischen Werkstoffen führt, sind Undichtigkeiten zu vermeiden.

Trotz vorgesehener Dichtungen besteht eine häufig auftretende Problematik darin, dass an den Schnittstellen zwischen einzelnen Komponenten, insbesondere den Komponenten Tank, Deckel, Fördermodul und Saugleitung, insbesondere aufgrund einer zu berücksichtigenden Volumenausdehnung des Reduktionsmittels vom flüssigen Aggregatzustand in den festen Aggregatzustand im Bereich von 10%, die Dichtigkeit und Festigkeit der Schnittstellen zu gewährleisten ist.

### Darstellung der Erfindung

An einem Vorratstank für einen Betriebs-/Hilfsstoff z.B. ein Reduktionsmittel zum Einbringen in das Abgas einer Verbrennungskraftmaschine, an dessen Unterseite mindestens eine Öffnung für die Montage der in einem Vorratstank einzubauenden Komponenten vorgesehen ist, wird erfindungsgemäß ein Flanschmodul angeordnet, wobei das Flanschmodul eingerichtet und mit einem Fördermodul derart verbunden ist, dass an der Verbindungsstelle keine axiale Relativbewegung bei einer axialen Belastung auftritt.

Eine Anordnung der Öffnung an der Unterseite des Vorratstanks ergibt vorteilhaft eine einfache Zugänglichkeit der Öffnung, wobei insbesondere eine Unabhängigkeit bei der Wahl der Tankform besteht. Ferner sind alle notwendigen Leitungen und Anschlüsse leicht zugänglich. Die Fördereinrichtung zum Fördern des Reduktionsmittels, insbesondere ein Fördermodul, ist ebenfalls an der Unterseite des Vorratstanks angeordnet. Das an der Öffnung angeordnete erfindungsgemäße Flanschmodul verschließt die Öffnung, wobei insbesondere die Problematik der Dichtigkeit und Festigkeit vorhandener Schnittstellen zwischen Innen- und Außenraum vorteilhaft gelöst sind. Hierbei wird insbesondere berücksichtigt, dass die Öffnung, welche von dem bevorrateten Reduktionsmittel geflutet ist, auch bei einer auf die zu verbindenden Dichtpartner wirkenden Belastung, abgedichtet ist.

Das vorgeschlagene Flanschmodul kann als ein Bauteil gestaltet sein, welches insbesondere eine Heizvorrichtung und einen Flanschdeckel umfasst. Die umfasste Heizvorrichtung, welche innerhalb des Vorratstanks, vorzugsweise in einem Bodenbereich des Vorratstanks, angeordnet ist, taut zumindest in dessen unmittelbarer Umgebung gefrorenes Reduktionsmittel soweit auf, dass flüssiges Reduktionsmittel für die Abgasnachbehandlungsvorrichtung vorliegt. Der ferner an dem Flanschmodul angeformte Flanschdeckel ist mit dem Vorratstank verbindbar.

Der Flanschdeckel des Flanschmoduls umfasst ferner mindestens eine elektrische Kontaktierung für die umfasste Heizvorrichtung und mindestens eine Förderleitung mit einer Saugöffnung, welche das flüssige Reduktionsmittel zur weiteren Verwendung fördert. Die mindestens eine Förderleitung, welche beispielsweise als Saugleitung bzw. als Sauglanze ausgebildet sein kann, fördert flüssiges Reduktionsmittel aus der Nähe der Heizvorrichtung, wobei flüssiges Reduktionsmittel an mindestens einer Saugöffnung in die Förderleitung eintritt. Bei einer Anordnung der Saugöffnung im unteren Bereich des Vorratstanks und ein sich an der Unterseite des Vorratstanks anschließendes Fördermodul, ergibt sich vorteilhaft, dass Reduktionsmittel selbstständig in die Saugöffnung einströmt. Ein Ansaugdruck ist nicht notwendig. Durch eine Anordnung von Saugöffnung und Fördermodul an der tiefsten Stelle im Vorratstank ergeben sich auch bei höheren Temperaturen und bei einer großen geografischen Betriebshöhe keine Probleme aufgrund einer Blasenbildung und Kavitation wird vermieden.

Vorteilhaft ist an dem Flanschdeckel ein sich in axialer Richtung, entlang einer Achse erstreckender Zapfen vorgesehen, in welchen die mindestens eine elektrische Kontaktierung der Heizvorrichtung und die mindestens eine Förderleitung verlaufen. Damit wird eine Schnittstelleneinheit Heizung, elektrische Verbindungen und Förderung des Reduktionsmittels in einfacher Weise realisiert. Insbesondere kann die Förderleitung des Flanschmoduls beheizbar gestaltet sein, beispielsweise über eine Heizwicklung oder einer anderen Ausgestaltung einer Leitungsheizung. Es ergibt sich eine kompakte Lösung für eine Reduktionsmitteleinrichtung mit Leitungen von kürzerer Länge.

Erfindungsgemäß ist vorgesehen, dass das Fördermodul, welches das Reduktionsmittel einer Abgasnachbehandlungsvorrichtung zuführt, an einem Zapfen des Flanschdeckels, an der Unterseite des Vorratstanks anzuordnen. Eine derartige Anordnung erweist sich hinsichtlich einer Stromversorgung des Fördermoduls als problemlos. Das Fördermodul, welches einem Ansaugsystem zugeordnet ist, umfasst unter anderem eine oder mehrere Pumpen, insbesondere Förderpumpen (beispielsweise Membranpumpen). Ferner sind Förderleitungen vorhanden, sowie gegebenenfalls Filter, Ventile oder ähnliches. Das Fördermodul weist eine axiale Ausnehmung auf, in welche der Zapfen des Flanschdeckels aufgenommen ist. Das Fördermodul wird vorteilhaft an dem Zapfen des Flanschdeckels axial befestigt, beispielsweise mittels eines Klemmrings, eines Bügels oder über Schrauben gesichert. Eine Relativbewegung an der Verbindungsstelle zwischen Fördermodul und Flanschdeckel wird vermieden, insbesondere wenn es aufgrund einer axialen Belastung des Flanschmoduls zu einer axialen Verschiebung auch des Flanschdeckels kommt, beispielsweise bei einer Wölbung nach außen. Die Dichtigkeit und die Festigkeit der Verbindung sind stets gewährleistet. Die axiale Befestigung des Fördermoduls ist demnach unabhängig von der Belastung, welche durch einen Wechsel des Aggregatzustandes des Reduktionsmittels hervorgerufen werden. Die verbundenen Elemente, welche Dichtpartner darstellen, werden stets gleichzeitig verformt, so dass die Dichtung stets gewährleistet ist, da keine Relativbewegung zwischen den Dichtpartnern auftritt.

Die Förderung des Reduktionsmittels erfolgt über die im Zapfen des Flanschdeckels verlaufende Förderleitung und über eine fluidische Schnittstelle zu der Förderleitung des Fördermoduls. Eine Abdichtung der fluidischen Schnittstelle kann vorteilhaft über zwei Dichtringe erfolgen, welche die fluidische Schnittstelle nach allen Seiten abdichten. Eine Abdichtung über radiale Elastomerelemente ist geeignet, da so die Abdichtung unabhängig von axialer Verformung der Dichtpartner gewährleistet ist. Geeignete Dichtringe sind beispielsweise Elastomerringe. Alternativ kann die Dichtung, welche elastisch gestaltet ist, direkt an dem Zapfen aus einem Zweikomponentenmaterial angespritzt sein, wodurch die Montage besonders einfach wird. Insbesondere erfährt diese fluidische Schnittstelle, welche zwischen Fördermodul und Flanschmodul besteht, keine axiale Belastung, da die Dichtpartner relativ zueinander in einer festen Beziehung stehen.

Beim Auftauen des im Vorratstank bevorrateten Reduktionsmittels bildet sich zunächst eine Zone aus flüssigem Reduktionsmittel in der Umgebung der Heizvorrichtung aus, welche im Bodenbereich des Vorratstanks angeordnet ist. In einem Bereich oberhalb des flüssigen Reduktionsmittels zum gefrorenen Reduktionsmittel hin, bildet sich beim Auftauvorgang aufgrund der damit einhergehenden Volumenreduzierung gegenüber dem festen Aggregatzustand und durch Absaugen flüssigen Reduktionsmittels ein Luftpolster aus. Umgekehrt liegt bei einem Wechsel des Betriebszustandes der Beginn des Einfrierens des Reduktionsmittels an eben dieser Grenzfläche zwischen flüssigem Reduktionsmittel und Luftpolster, da das an dem Vorratstank angeordnete Fördermodul durch seine im Betrieb entstehende Wärme ein Einfrieren in seiner unmittelbaren Umgebung verzögert. Die mit dem Einfriervorgang einhergehende Volumenausdehnung erfolgt senkrecht zu der Grenzfläche, beispielsweise in Richtung des Luftpolsters. Durch die Volumenausdehnung kann es aber auch zu einer Wölbung des Flanschdeckels nach Außen kommen. Der Flanschdeckel kann sich demnach bei jedem Lastwechsel durchbiegen. Aber auch beim Durchbiegen, verbleiben die Dichtpartner stets in einer definierten Position zueinander, so dass die Abdichtung der fluidischen Schnittstellen gewährt ist.

Zur Aufnahme der durch einen Wechsel des Aggregatzustandes auf die Tankwand des Vorratstanks wirkenden Kräfte, wobei es zu Wölbungen des Vorratstanks kommt, wird eine Elastizität des Flanschmoduls und/oder des Vorratstanks verwirklicht. Diese Elastizität kann über eine geeignete Materialwahl, beispielsweise Kunststoffe, insbesondere Polyethylen oder hoch dichtes Polyethylen und/oder über eine entsprechende Gestaltung der Verbindungsstelle und die Positionierung der Schweißnaht zur stoffschlüssigen Verbindung von Flanschmodul und Vorratstank bereitgestellt werden, wie dies erfindungsgemäß vorgeschlagen ist.

Zur Gewährleistung der Dichtigkeit der Verbindungsstelle zwischen Vorratstank und Flanschmodul, welche beispielsweise durch eine Verschweißung bereitgestellt wird, ist vorgesehen, dass das Flanschmodul zumindest in einem Bereich, welcher in Kontakt mit dem Fördermodul steht, aus einem Material gefertigt ist, welches eine Steifigkeit zumindest dieses Bereichs gewährleistet.

### Kurze Beschreibung der Zeichnungen

Anhand der Zeichnung wird die Erfindung nachstehend eingehender beschrieben.

Es zeigen:
- Figur 1: ein Ausführungsbeispiel eines Flanschmoduls gemäß des Standes der Technik,
- Figur 2: ein Ausführungsbeispiel eines erfindungsgemäßen Flanschmoduls,
- Figur 3: Details eines erfindungsgemäßen Ausführungsbeispiels, und
- Figur 4: Details einer Verbindungsstelle zwischen Vorratstank und erfindungsgemäßen Flanschmodul.

### Ausführungsvarianten

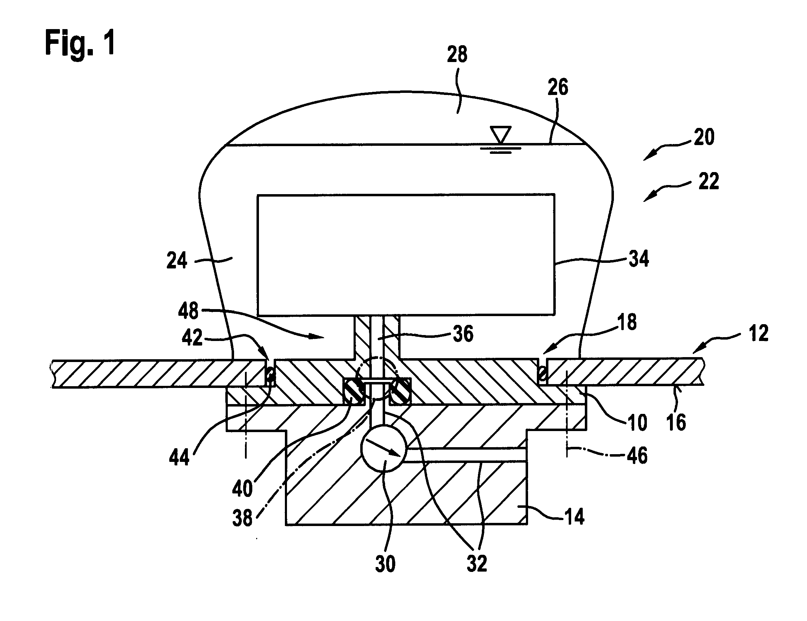

Figur 1 zeigt einen Vorratstank 12 für ein Reduktionsmittel mit einer Öffnung 18, ein diese Öffnung 18 verschließendes Flanschmodul 10, gemäß dem Stand der Technik und ein Fördermodul 14, angeordnet an einer Unterseite 16 des Vorratstanks 12. Der Vorratstank 12 ist mit einem Reduktionsmittelvorrat 20 gefüllt, wobei ein Bereich 22 mit gefrorenem Reduktionsmittel und eine Blase 24 mit flüssigen Reduktionsmittel dargestellt sind, welche miteinander eine Grenzfläche 26 bilden. Oberhalb der Grenzfläche 26 ist ein Luftpolster 28 dargestellt, welches durch eine Volumenänderung beim Wechsel des Aggregatzustandes und durch Entnahme flüssigen Reduktionsmittels entsteht. Gemäß Figur 1 weist Fördermodul 14 eine elektrische Förderpumpe 30 und Förderleitungen 32 auf, wobei Förderleitungen 32 zu einem in Figur 1 nicht dargestellten Dosiermodul führen.

Im Bodenbereich des Vorratstanks 12 für ein Reduktionsmittel ist eine Heizvorrichtung 34 aufgenommen. Flüssiges Reduktionsmittel gelangt über eine in dem Flanschmodul 10 bereitgestellte Förderleitung 36, zu einer fluidischen Schnittstelle 38 zwischen Förderleitung 36 des Flanschmoduls 10 und Förderleitung 32, welche nach außen über Elastomerdichtungen 40 abgedichtet ist.

Es ist bekannt, das Flanschmodul 10 mit dem Vorratstank 12 an einer Verbindungsstelle 42, entweder zu verschweißen oder eine Verschraubung 46 mit einer Dichtung 44 vorzusehen, welche gleichzeitig das Fördermodul 14 an dem Flanschmodul 10 befestigt.

Bei der in Figur 1 dargestellten Anordnung kühlt sich bei einem Abstellen der Heizvorrichtung 34 und bei entsprechenden Temperaturen das flüssige Reduktionsmittel soweit ab, dass an der Grenzfläche 26 ein Einfriervorgang beginnt, wobei in einem Bereich 48 der Einfriervorgang durch die von dem Fördermodul 14 abgegebene Wärme verzögert wird.

Gemäß dem in Figur 1 dargestellten Flanschmodul 10 ergeben sich Schnittstellen, welche sich hinsichtlich Dichtigkeit und Festigkeit als problematisch erweisen. Insbesondere die Verbindung des Flanschmoduls 10 mit dem Fördermodul 14 erweist sich als problematisch, da das Flanschmodul 10 in dem Bereich 48 einer hohen Belastung ausgesetzt ist, welche sich durch die Volumenausdehnung beim Erstarren des Reduktionsmittelvorrats 20 ergibt.

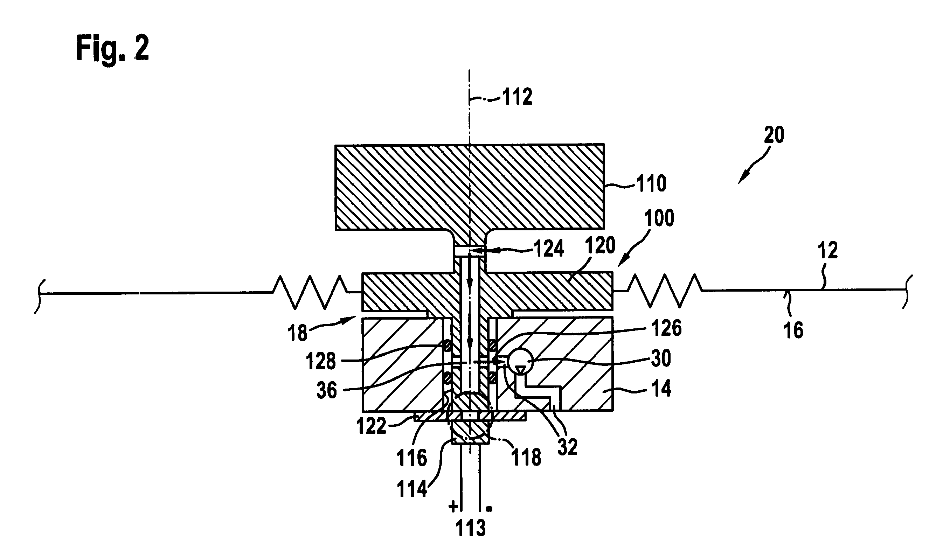

Figur 2 zeigt eine Darstellung eines Ausführungsbeispiels des erfindungsgemäßen Flanschmoduls 100. Im Folgenden werden gleiche Elemente mit gleichen Bezugszeichen bezeichnet. Das Flanschmodul 100 ist an der Unterseite 16 des Vorratstanks 12 für ein Hilfs-/Betriebsstoff, insbesondere ein Reduktionsmittel, angeordnet und verschließt die Öffnung 18. Im Innern des Vorratstanks 12 ist ein Hilfs-/Betriebsstoff für eine Verbrennungskraftmaschine bevorratet. Beispielsweise ist im Vorratstank 12 ein Reduktionsmittel für eine Abgasnachbehandlungsvorrichtung bevorratet, wobei es sich insbesondere um eine Harnstoff-Wasser-Lösung oder eine Harnstofflösung handelt. Der bevorratete Hilfs-/Betriebsstoff, insbesondere ein Reduktionsmittelvorrat 20, liegt je nach herrschender Temperatur in einem festen und/oder einem flüssigen Aggregatzustand vor. An der Unterseite 16 des Vorratstanks 12 für ein Reduktionsmittel ist das Fördermodul 14 angeordnet, welches unter anderem die Förderpumpe 30 und Förderleitungen 32 umfasst zur Förderung flüssigen Reduktionsmittels zu einem Dosiermodul.

Das erfindungsgemäße Flanschmodul 100 ist als ein integrales Bauteil ausgeführt, wobei es eine Heizvorrichtung 110 enthält, mittels derer der Reduktionsmittelvorrat 20, gegebenenfalls auch erstarrtes Reduktionsmittel, auf eine Arbeitstemperatur gebracht werden kann und/oder mittels derer ein Einfrieren des flüssigen Reduktionsmittelvorrats 20 im Vorratstank 12 verhindert werden kann. Die Heizvorrichtung 110, welche in Figur 2 nur schematisch dargestellt ist, kann beispielsweise in Form eines flächigen Aluminiumkörpers gestaltet sein, in dem eine oder mehrere Heizelemente, beispielsweise PTC-Heizelemente (Positive Temperatur Coefficient) integriert sind. Die Energieversorgung der Heizvorrichtung 110 erfolgt vorzugsweise elektrisch, wobei eine elektrische Kontaktierung 113 der Heizvorrichtung 110 ebenfalls in dem Flanschmodul 100 integriert ist. Vorzugsweise ist die Heizvorrichtung 110 in dem Flanschmodul 100 integriert, beispielsweise ist ein Aluminiumkörper mit einem Kunststoff umspritzt. Die Kunststoffumspritzung dient zum Korrosionsschutz der PTC-Heizelemente bzw. des Aluminiumkörpers vor der als Reduktionsmittel beispielsweise verwendeten wässrigen Harnstofflösung.

An dem erfindungsgemäßen Flanschmodul 100, welches die Heizvorrichtung 110 enthält, ist ferner ein Flanschdeckel 120 ausgebildet, welche die Öffnung 18 an der Unterseite 16 des Vorratstanks 12 in geeigneter Form verschließt. An dem Flanschmodul 100 ist ein Zapfen 114 ausgebildet, welcher sich in axialer Richtung entlang einer Achse 112 derart erstreckt, dass er an der Unterseite 16 des Vorratstanks 12 hervorragt. Das Fördermodul 14 ist an der Unterseite 16 des Vorratstanks 12 angeordnet und mit dem Flanschmodul 100 verbunden. Das Fördermodul 14 weist hierfür vorteilhaft eine axial ausgebildete Ausnehmung 116 auf, in welcher der Zapfen 114 aufgenommen ist. Der Zapfen 114 ist derart ausgebildet, dass er in axialer Richtung aus der Ausnehmung 116 des Fördermoduls 14 herausragt und einen Bereich 118 bereitstellt, an dem das Fördermodul 14 erfindungsgemäß axial befestigt ist. Diese axiale Befestigung 122 kann in Form eines Klemmrings, eines Bügels oder in Form einer Schraube oder Mutter ausgebildet sein. Diese axiale Befestigung 122 von Fördermodul 14 und Zapfen 114 bzw. Flanschmodul 10 liegt in einem Bereich der höchsten axialen Belastung des Flanschmoduls 10, welche beispielsweise durch die Volumenänderung bei einem Wechsel des Aggregatzustandes des Betriebs- und Hilfsstoffes, insbesondere des Reduktionsmittels im Vorratstank 12 hervorgerufen wird. Durch die Art der Befestigung des Fördermoduls 14 an dem Zapfen 114 ist die Verbindung frei von einer axialen Belastung. Insbesondere bei einer Durchbiegung des Flanschmoduls 10, die Verbindung lastfrei, wobei es zu weitgehend keiner relativen Bewegung zwischen Flanschmodul 10 und Fördermodul 14 kommt. Durch die bereitgestellte Verbindung der Dichtpartner Flanschmodul 100 und Fördermodul 10 ist stets gewährleistet, dass sich die Dichtpartner miteinander gleichzeitig bewegen, wobei eine Abdichtung der Dichtpartner belastungsfrei gestaltet ist und Relativbewegungen zwischen den Dichtpartnern ausgeschlossen sind.

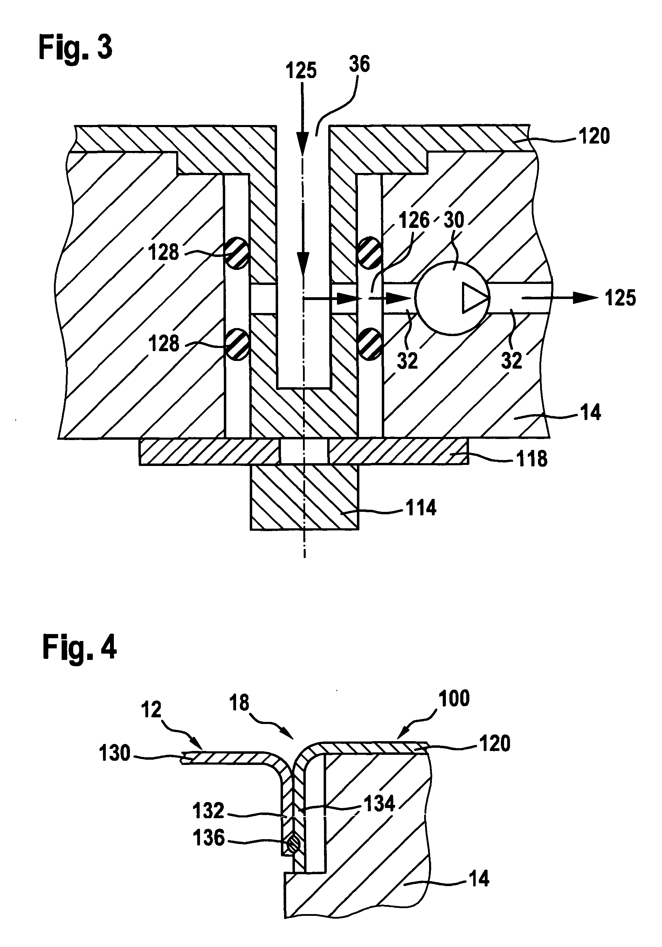

Das erfindungsgemäße Flanschmodul 100 ist derart ausgebildet, dass beispielsweise an dem Zapfen 114 Saugöffnungen 124 in einem im Inneren des Vorratstanks 12 gelegenen Bereich zwischen Heizvorrichtung 110 und Flanschdeckel 120 ausgeführt sind. Hierbei wird eine fluidische Verbindung zwischen dem Inhalt des Vorratstanks 12 und der Förderleitung 36 bereitgestellt, wie dies in Figur 2 ersichtlich ist. Die Förderleitung 36, welche in dem in Figur 2 und im Detail in Figur 3 dargestellten Ausführungsbeispiel als Strömungskanal mit einem geschlossenen Ende ausgebildet ist, kann auch als Sauglanze oder Saugleitung gestaltet sein. Das in der Förderleitung 36 geförderte flüssige Reduktionsmittel, angedeutet durch Pfeile als Reduktionsmittelstrom 125, steht an einer fluidischen Schnittstelle 126 in Verbindung mit Förderleitungen 32 des Fördermoduls 14. Die fluidische Schnittstelle 126 wird nach außen abgedichtet, beispielsweise durch Elastomerringe 128, welche an dem Zapfen 114 oberhalb und unterhalb der fluidischen Schnittstelle 126 angeordnet sind. Eine Abdichtung über radiale Elastomerelemente ermöglicht, dass die Abdichtung unabhängig von einer möglichen axialen Verformung der Dichtpartner gewährleistet ist. Durch die bereitgestellte axiale Befestigung des Fördermoduls 14 an dem Flanschmodul 100 ist insbesondere für die fluidische Schnittstelle 126 stets gewährleistet, dass diese bei axialer Belastung abgedichtet ist.

Insbesondere aufgrund der an dem Flanschmodul 100 auftretenden axialen Belastungen bis hin zu einer Durchbiegung des Flanschmoduls 100 mit maximaler Auswirkung insbesondere im Bereich des axialen Zapfens 114 sind die Verbindungen von Flanschmodul 100 zu Fördermodul 14 und von Flanschmodul 100 zu Vorratstank 12 hinsichtlich Dichtigkeit und Festigkeit problematisch. Durch die axiale Befestigung des Fördermoduls 14 an dem Zapfen 114 des Flanschmoduls 100 ergibt sich eine Reduzierung bzw. eine Vermeidung einer axialen Relativbewegung der gegeneinander abzudichtenden Dichtpartner, da diese stets gleichzeitig eine Verformung erfahren, so dass die Abdichtung der fluidischen Schnittstelle 126 stets gewährleistet ist. In einem Bereich, in dem Fördermodul 14 und Flanschdeckel 120 des Flanschmoduls 100 miteinander in Kontakt stehen, weist das Material des Flanschmoduls 100 bzw. des an dem Flanschmodul 100 angeformten Flanschdeckels 120 eine höhere Steifigkeit auf. Geeignete Materialien sind faserverstärkte Kunststoffe, beispielsweise Polyethylen, hoch dichtes Polyethylen oder Polyamid. Außerhalb des Bereichs des Kontaktes zwischen Flanschmodul 100 und Fördermodul 14 ist dagegen eine Elastizität insbesondere des Materials für das Flanschmodul 100 und/oder für den Vorratstank 12 vorteilhaft. Bevorzugt werden unverstärkte Kunststoffe, beispielsweise Polyethylen oder hoch dichtes Polyethylen.

Wie aus Figur 4 im Detail hervorgeht, kann eine Verbindung Flanschmodul 100 und Vorratstank 12 für ein Hilfs-/Betriebsstoff als stoffschlüssige Verbindung, als Schweiß-, Löt- oder Hartlötverbindung ausgeführt werden, wobei eine Elastizität über die Ausführung der stoffschlüssigen Verbindung verwirklicht wird. Der Vorratstank 12 weist eine Tankwand 130 auf, welche im Bereich der Öffnung 18 nach außen gebogene Enden 132 hat. Der an das Flanschmodul 100 angeformte Flanschdeckel 120 weist ebenfalls nach außen gebogenen Endstücke 134 auf. Die nach außen gebogenen Enden 132 der Tankwand 130 und die nach außen gebogenen Endstücke 134 des Flanschdeckels 120 werden miteinander an einer Fügestelle 136 verschweißt, wobei durch die Gestaltung der Fügestelle 136 eine Elastizität der Verbindung vorgegeben ist.

## Patentansprüche

1. Flanschmodul (100) für einen Vorratstank (12) für einen Hilfs-/Betriebsstoff für eine Verbrennungskraftmaschine, insbesondere ein Reduktionsmittel zum Einbringen in das Abgas einer Verbrennungskraftmaschine, wobei der Vorratstank (12) mindestens eine Öffnung (18) für einzubauende Komponenten aufweist und das Flanschmodul (100) an der mindestens einen Öffnung (18) angeordnet ist, **dadurch gekennzeichnet, dass** die mindestens eine Öffnung (18) an einer Unterseite (16) des Vorratstanks (12) für Reduktionsmittel angeordnet ist, wobei das Flanschmodul (100) eingerichtet und mit einem Fördermodul (14) derart verbunden ist, dass an der Verbindung keine axiale Relativbewegung bei einer axialen Belastung auftritt, wobei das Flanschmodul (100) einen Flanschdeckel (120) umfasst, wobei an dem Flanschdeckel (120) ein Zapfen (114) vorgesehen ist, der sich in axialer Richtung entlang einer Achse (112) erstreckt, wobei um den Zapfen (114) das Fördermodul (14) angeordnet ist, das eine Förderpumpe (30) und Förderleitungen (32) umfasst, wobei das Fördermodul (14) an dem Zapfen (114) axial befestigt ist, und wobei das Fördermodul an der Unterseite (16) des Vorratstanks (12) angeordnet ist.

2. Flanschmodul (100) nach Anspruch 1, **dadurch gekennzeichnet, dass** der Flanschdeckel (120) mindestens eine Förderleitung (36) zum Fördern des Reduktionsmittels umfasst.

3. Flanschmodul (100) nach Anspruch 2, **dadurch gekennzeichnet, dass** eine fluidische Verbindung zwischen der im Flanschdeckel (120) verlaufenden Förderleitung (36) und den Förderleitungen (32) des Fördermoduls (14) bereitgestellt ist, welche nach außen über Dichtungen (128) abgedichtet ist.

4. Flanschmodul (100) nach dem vorhergehenden Anspruch, **dadurch gekennzeichnet, dass** die Dichtungen (128) als Elastomerringe ausgebildet sind, welche an dem Zapfen (114) radial angeordnet sind, wobei die Abdichtung unabhängig von einer axialen Verformung von Vorratstank (12) und Zapfen (114) ist.

5. Flanschmodul (100) nach Anspruch 2, 3 oder 4, **dadurch gekennzeichnet, dass** die mindestens eine Förderleitung (36) für das Reduktionsmittel in dem Zapfen (114) verläuft.

6. Flanschmodul (100) nach einem der vorhergehenden Ansprüche, **dadurch gekennzeichnet, dass** das Flanschmodul (100) mindestens eine Heizvorrichtung (110) umfasst.

7. Flanschmodul (100) nach Anspruch 6, **dadurch gekennzeichnet, dass** der Flanschdeckel (120) mindestens eine elektrische Kontaktierung (113) der Heizvorrichtung (110) umfasst.

8. Flanschmodul (100) nach Anspruch 7, **dadurch gekennzeichnet, dass** die mindestens eine elektrische Kontaktierung (113) der Heizvorrichtung (110) in dem Zapfen (114) verläuft.

9. Flanschmodul (100) nach einem der vorhergehenden Ansprüche, **dadurch gekennzeichnet, dass** es weitgehend aus einem Kunststoffmaterial, wie Polyethylen oder hoch dichtes Polyethylen gefertigt ist.

10. Flanschmodul (100) nach einem der vorhergehenden Ansprüche, **dadurch gekennzeichnet, dass** der Flanschdeckel (120) und/oder der Vorratstank (12) eine Elastizität in einem Bereich aufweisen, welcher außerhalb eines Kontaktbereichs zwischen dem Fördermodul (14) und Flanschdeckel (120) liegt.

11. Flanschmodul (100) nach einem der vorhergehenden Ansprüche, **dadurch gekennzeichnet, dass** der Flanschdeckel (120) und der Vorratstank (12) kraftschlüssig miteinander verbunden sind.

12. Flanschmodul (100) nach Anspruch 11, **dadurch gekennzeichnet, dass** der Flanschdeckel (120) und der Vorratstank (12) miteinander an einer Fügestelle (136) stoffschlüssig verbunden sind.

13. Flanschmodul (100) nach Anspruch 12, **dadurch gekennzeichnet, dass** die stoffschlüssige Verbindung derart ausgeführt ist, dass sie eine axiale Elastizität aufweist.

14. Vorratstank mit einem Flanschmodul nach einem der vorhergehenden Ansprüche.

## Claims

1. Flange module (100) for a storage tank (12) for an additive/fuel for an internal combustion engine, in particular a reducing agent to be introduced into the exhaust gas of an internal combustion engine, the storage tank (12) having at least one orifice (18) for components to be installed and the flange module (100) being arranged on the at least one orifice (18), **characterized in that** the at least one orifice (18) is arranged on an underside (16) of the storage tank (12) for reducing agent, the flange module (100) being set up and connected to a conveying module (14) in such a way that no axial relative movement occurs under axial load at the connection, the flange module (100) comprising a flange cover (120), there being provided on the flange cover (120) a tenon (114) which extends in the axial direction along an axis (112), there being arranged around the tenon (114) the conveying module (14) which comprises a feed pump (30) and conveying lines (32), the conveying module (14) being fastened axially to the tenon (114), and the conveying module being arranged on the underside (16) of the storage tank (12).

2. Flange module (100) according to Claim 1, **characterized in that** the flange cover (120) comprises at least one conveying line (36) for conveying the reducing agent.

3. Flange module (100) according to Claim 2, **characterized in that** a fluidic connection is made between the conveying line (36) running in the flange cover (120) and the conveying lines (32) of the conveying module (14) and is sealed off outwardly via seals (128).

4. Flange module (100) according to the preceding claim, **characterized in that** the seals (128) are designed as elastomeric rings which are arranged radially on the tenon (114), sealing being independent of axial deformation of the storage tank (12) and tenon (114).

5. Flange module (100) according to Claim 2, 3 or 4, **characterized in that** the at least one conveying line (36) for the reducing agent runs in the tenon (114).

6. Flange module (100) according to one of the preceding claims, **characterized in that** the flange module (100) comprises at least one heating device (110).

7. Flange module (100) according to Claim 6, **characterized in that** the flange cover (120) comprises at least one electrical contacting (113) of the heating device (110).

8. Flange module (100) according to Claim 7, **characterized in that** the at least one electrical contacting (113) of the heating device (110) runs in the tenon (114).

9. Flange module (100) according to one of the preceding claims, **characterized in that** it is manufactured largely from a plastic material, such as polyethylene or high-density polyethylene.

10. Flange module (100) according to one of the preceding claims, **characterized in that** the flange cover (120) and/or the storage tank (12) have/has elasticity in a region which lies outside a contact region between the conveying module (14) and the flange cover (120).

11. Flange module (100) according to one of the preceding claims, **characterized in that** the flange cover (120) and the storage tank (12) are connected non-positively to one another.

12. Flange module (100) according to Claim 11, **characterized in that** the flange cover (120) and the storage tank (12) are connected to one another in a materially integral manner at a joining point (136).

13. Flange module (100) according to Claim 12, **characterized in that** the materially integral connection is designed in such a way that it has axial elasticity.

14. Storage tank having a flange module according to one of the preceding claims.

## Revendications

1. Module de bride (100) pour un réservoir de stockage (12) pour un agent auxiliaire ou un carburant pour un moteur à combustion interne, en particulier un agent réducteur à introduire dans le gaz d'échappement d'un moteur à combustion interne, le réservoir de stockage (12) présentant au moins une ouverture (18) pour des composants à incorporer et le module de bride (100) étant disposé au niveau de l'au moins une ouverture (18), **caractérisé en ce que** l'au moins une ouverture (18) est disposée sur un côté inférieur (16) du réservoir de stockage (12) pour agent réducteur, le module de bride (100) étant prévu et connecté à un module de refoulement (14) de telle sorte qu'aucun mouvement relatif axial ne se produise au niveau de la connexion dans le cas d'une contrainte axiale, le module de bride (100) comprenant un couvercle de bride (120), un tourillon (114) étant prévu sur le couvercle de bride (120), lequel tourillon s'étend dans la direction axiale le long d'un axe (112), le module de refoulement (14) étant disposé autour du tourillon (114), lequel module de refoulement comprend une pompe de refoulement (30) et des conduites de refoulement (32), le module de refoulement (14) étant fixé axialement au tourillon (114), et le module de refoulement étant disposé sur le côté inférieur (16) du réservoir de stockage (12).

2. Module de bride (100) selon la revendication 1, **caractérisé en ce que** le couvercle de bride (120) comprend au moins une conduite de refoulement (36) pour refouler l'agent réducteur.

3. Module de bride (100) selon la revendication 2, **caractérisé en ce qu'**une liaison fluidique est établie entre la conduite de refoulement (36) s'étendant dans le couvercle de bride (120) et les conduites de refoulement (32) du module de refoulement (14), laquelle liaison fluidique est étanchéifiée vis-à-vis de l'extérieur par le biais de joints d'étanchéité (128).

4. Module de bride (100) selon la revendication précédente, **caractérisé en ce que** les joints d'étanchéité (128) sont réalisés sous forme de bagues élastomères qui sont disposées radialement sur le tourillon (114), l'étanchéité étant indépendante d'une déformation axiale du réservoir de stockage (12) et du tourillon (114).

5. Module de bride (100) selon la revendication 2, 3 ou 4, **caractérisé en ce que** l'au moins une conduite de refoulement (36) pour l'agent réducteur s'étend dans le tourillon (114).

6. Module de bride (100) selon l'une quelconque des revendications précédentes, **caractérisé en ce que** le module de bride (100) comprend au moins un dispositif de chauffage (110).

7. Module de bride (100) selon la revendication 6, **caractérisé en ce que** le couvercle de bride (120) comprend au moins un système de contact électrique (113) du dispositif de chauffage (110).

8. Module de bride (100) selon la revendication 7, **caractérisé en ce que** l'au moins un système de contact électrique (113) du dispositif de chauffage (110) s'étend dans le tourillon (114).

9. Module de bride (100) selon l'une quelconque des revendications précédentes, **caractérisé en ce qu'**il est fabriqué principalement à partir d'un matériau plastique, tel que du polyéthylène ou du polyéthylène haute densité.

10. Module de bride (100) selon l'une quelconque des revendications précédentes, **caractérisé en ce que** le couvercle de bride (120) et/ou le réservoir de stockage (12) présentent une élasticité dans une plage qui se situe en dehors d'une plage de contact entre le module de refoulement (14) et le couvercle de bride (120).

11. Module de bride (100) selon l'une quelconque des revendications précédentes, **caractérisé en ce que** le couvercle de bride (120) et le réservoir de stockage (12) sont connectés l'un à l'autre par engagement par force.

12. Module de bride (100) selon la revendication 11, **caractérisé en ce que** le couvercle de bride (120) et le réservoir de stockage (12) sont connectés l'un à l'autre par engagement par liaison de matière au niveau d'un joint (136).

13. Module de bride (100) selon la revendication 12, **caractérisé en ce que** la connexion par liaison de matière est réalisée de telle sorte qu'elle présente une élasticité axiale.

14. Réservoir de stockage comprenant un module de bride selon l'une quelconque des revendications précédentes.
